(19) Europäisches Patentamt
European Patent Office
Office européen des brevets

(11) **EP 4 614 213 A1**

(12) **EUROPEAN PATENT APPLICATION**
published in accordance with Art. 153(4) EPC

(43) Date of publication:
**10.09.2025 Bulletin 2025/37**

(21) Application number: **22814277.4**

(22) Date of filing: **11.11.2022**

(51) International Patent Classification (IPC):
***G02B 30/56*** (2020.01)   ***G09F 19/18*** (2006.01)

(52) Cooperative Patent Classification (CPC):
**G02B 30/56; G02B 30/60; G09F 19/18;**
**H04N 13/128; H04N 13/322; H04N 13/388**

(86) International application number:
**PCT/CN2022/131538**

(87) International publication number:
**WO 2024/092871 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.11.2022 CN 202211369196**

(71) Applicant: **Wuhan China Star Optoelectronics**
**Technology Co., Ltd.**
**Wuhan, Hubei 430079 (CN)**

(72) Inventors:
• **YE, Xinlin**
**Wuhan, Hubei 430079 (CN)**
• **ZHANG, Guiyang**
**Wuhan, Hubei 430079 (CN)**
• **HE, Rui**
**Wuhan, Hubei 430079 (CN)**
• **ZHA, Guowei**
**Wuhan, Hubei 430079 (CN)**

(74) Representative: **Ström & Gulliksson AB**
**P.O. Box 4188**
**203 13 Malmö (SE)**

(54) **SUSPENDED IMAGING SYSTEM**

(57)    A suspended imaging system includes: a display assembly; an aerial imaging assembly located on a side of the display assembly; a reflective element located on a side of the display assembly and disposed obliquely, wherein the display assembly forms a virtual image of the display assembly on another side of the reflective element, and the virtual image of the display assembly passes through the aerial imaging assembly and form the suspended image on another side of the aerial imaging assembly; and a driving assembly respectively connected to the display assembly and the reflective element. The driving assembly drives the display assembly and the reflective element to rotate.

FIG. 2

## Description

The present invention relates to a suspended imaging technical field, and particular to a suspended imaging system.

## BACKGROUND OF INVENTION

With rapid development of 5G era, the concept of metaverse will be an important interactive method in the next generation of high-speed information era. Technologies of virtual reality (VR), augmented reality (AR), mixed Reality (MR) can realize interaction between virtuality and reality through wearable devices. Furthermore, important assemblies of many interactive devices, display devices have become indispensable electronic devices for communication, interactions, learning, entertainment, shopping, etc. Micro-control light elements used in suspended display technology can realize aerial imaging of display devices, and can realize interaction between virtuality and reality without any wearable devices. Therefore, the suspended display technology will play an important role in display devices of next generation. Currently, suspended display has been used in many scenarios at home and abroad, including vehicle, home living, public and other scenarios. Wherein, some human-computer interaction schemes are also provided, which increase user experiences. Currently, by adjusting a distance between a display screen and an aerial imaging element in an entire display system, a larger image suspended display depth is obtained, thereby greatly improving user experience. However, in this way, a volume of the entire display system can be increased, which reduces user immersion sense and product competitiveness.

The technical problem is that: by adjusting the distance between the display screen and the aerial imaging element in the entire display system, a larger image suspended display depth is obtained, thereby greatly improving user experience; however, in this way, a volume of the entire display system can be increased, which reduces the user sense of immersion and product competitiveness.

## SUMMARY OF INVENTION

In this light, the present invention provides a suspended imaging system with a smaller volume and a greater image suspension display depth.

In order to solve the problems mentioned above, the present invention provides the technical solutions as follows.

A suspended imaging system is configured to form a suspended image. The suspended imaging system includes:

a display assembly;
an aerial imaging assembly located on a side of the display assembly;
a reflective element located on a side of the display assembly and inclined toward a direction close to the display assembly, wherein the display assembly forms a virtual image of the display assembly on other side of the reflective element, the virtual image of the display assembly passes through the aerial imaging assembly and forms the suspended image on other side of the aerial imaging assembly; and
a driving assembly respectively connected to the display assembly and the reflective element,
wherein the driving assembly drives the display assembly and the reflective element to rotate clockwisely or to rotate counterclockwisely, the virtual image of the display assembly and the display assembly are symmetrical about the reflective element, the virtual image of the display assembly is opposite to a position of the aerial imaging assembly, and the suspended image and the virtual image of the display assembly are symmetrical relative to the aerial imaging assembly.

In one optional embodiment of the present invention, a first state is defined as that when the display assembly and the reflective element do not rotate, a second state is defined as that after the display assembly and the reflective element rotate, the display assembly in the first state forms a first virtual image on the other side of the reflective element, the display assembly in the second state forms a second virtual image on the other side of the reflective element, and the first virtual image and the second virtual image are parallel and spaced apart along a first direction.

In one optional embodiment of the present invention, the display assembly in the first state is perpendicular to the first virtual image, and an included angle between the reflective element in the first state and the display assembly in the first state is 45°.

In one optional embodiment of the present invention, the driving assembly drives the display assembly to rotate a first angle $\beta$, and the driving assembly drives the reflective element to rotate a second angle $\alpha$, and $\alpha$ and $\beta$ satisfy following equations of $0°<\alpha<45°$, $0°<\beta<90°$, and $\beta=2\alpha$.

In one optional embodiment of the present invention, when the driving assembly drives the display assembly and the reflective element to respectively rotate clockwisely, a distance from the second virtual image to the aerial imaging assembly is greater than a distance from the first virtual image to the aerial imaging assembly.

In one optional embodiment of the present invention, when the driving assembly drives the display assembly and the reflective element to respectively rotate counterclockwisely, a distance from the second virtual image to the aerial imaging assembly is less than a distance from the first virtual image to the aerial imaging assembly.

In one optional embodiment of the present invention, the first virtual image passes through the aerial imaging assembly and forms a first suspended image on the other side of the aerial imaging assembly, the second virtual image passes through the aerial imaging assembly and forms a second suspended image on the other side of the aerial imaging assembly, and the first suspended image and the second suspended image are parallel and spaced apart along a second direction perpendicular to the first direction.

In one optional embodiment of the present invention, the aerial imaging assembly includes a first reflective array and a second reflective array, the second reflective array is located on the first reflective array, the first reflective array includes a plurality of first reflective sheets spaced apart, the second reflective array includes a plurality of second reflective sheets spaced apart, and an extending direction of the plurality of first reflective sheets is different from an extending direction of the plurality of second reflective sheets.

A first reflection of light emitted from the virtual image of the display assembly occurs at the plurality of first reflective sheets, a generated first reflected light is incident on the plurality of second reflective sheets, and a second reflection occurs; and a generated second reflected light forms the suspended image.

In one optional embodiment of the present invention, a tilt angle of the plurality of first reflective sheets relative to the display assembly is 45°.

In one optional embodiment of the present invention, the plurality of first reflective sheets are opposite to a position of the virtual image of the display assembly.

In one optional embodiment of the present invention, the aerial imaging assembly includes:

a beam splitting structure located on a side of the display assembly; and
a retroreflective structure located on a side of the beam splitting structure and inclined toward a direction close to the beam splitting structure.

Wherein, the virtual image of the display assembly and the retroreflective structure are located on the same side of the beam splitting structure, a light emitted from the virtual image of the display assembly incident on the beam splitting structure is reflected to the retroreflective structure, a part of light reflected by the retroreflective structure forms the virtual image of the display assembly, and the virtual image of the display assembly and the suspended image are symmetrical relative to the beam splitting structure.

In one optional embodiment of the present invention, the beam splitting structure is perpendicular to the virtual image of the display assembly.

In one optional embodiment of the present invention, the suspended imaging system further includes a fixing assembly, and the driving assembly, the beam splitting structure, and the retroreflective structure are respectively fixed on the fixing assembly.

In one optional embodiment of the present invention, the reflective element is a planar reflective mirror.

In one optional embodiment of the present invention, an included angle between the reflective element in the first state and the virtual image of the display assembly is an obtuse angle.

In one optional embodiment of the present invention, an included angle between the reflective element in the first state and the virtual image of the display assembly is a sharp angle.

In one optional embodiment of the present invention, the reflective element includes a connection end and a first free end, the connection end is connected to the driving assembly, and

the driving assembly drives the reflective element to rotate around the connection end.

In one optional embodiment of the present invention, the driving assembly includes a rotating shaft, the display assembly is fixed on the rotating shaft, the display assembly includes a second free end, a third free end, and a middle portion connecting to the second free end and the third free end, and the rotating shaft is fixedly connected to the middle portion.

The driving assembly drives the rotating shaft to rotate to drive the display assembly to rotate around with the rotating shaft acting as a rotation center.

In one optional embodiment of the present invention, the suspended imaging system further includes a fixing assembly, and the driving assembly and the aerial imaging assembly are respectively fixed on the fixing assembly.

In one optional embodiment of the present invention, the first virtual image passes through the aerial imaging assembly and forms a first suspended image on the other side of the aerial imaging assembly, the second virtual image passes through the aerial imaging assembly and forms a second suspended image on the other side of the aerial imaging assembly, and the first suspended image and the second suspended image are parallel and spaced apart along a second direction perpendicular to the first direction.

In the suspended imaging system provided by the present invention, by disposing the reflective element on a side of the display assembly, by using the driving assembly to drive the display assembly and the reflective element to rotate clockwisely or counterclockwisely, and by using the reflective element to form the virtual image of the display assembly being symmetrical to the display assembly about the reflective element on other side of the reflective element facing away the display assembly, the virtual image of the display assembly forms the suspended image on other side of the aerial imaging assembly by the aerial imaging assembly. As the display assembly and the virtual image of the display assembly are symmetrical about the reflective element, and the virtual image of the display assembly and the suspended image are symmetrical about the aerial imaging assembly, so a distance between the virtual images of the display assembly under different rotation angles can be adjusted by respectively adjusting the rotation angles of the display assembly and the reflective element, so that the suspended image is allowed to obtain a larger displacement, thereby making the suspended image of the suspended imaging system to have a relatively large display depth. Therefore, the display assembly of the suspended imaging system provided by the present invention does not need to be moved, and adjustment of the display depth of the suspended image can be realized only by rotating the display assembly and the reflective element, which can obtain a larger display depth in a smaller space and is beneficial to reduce the volume of the suspended imaging system.

DESCRIPTION OF DRAWINGS

To more clearly illustrate the technical solutions of the embodiments of the present invention, the accompanying figures of the present invention will be described in brief. Obviously, the accompanying figures described below are only part of the embodiments of the present invention, from which figures those skilled in the art can derive further figures without making any inventive efforts.

FIG. 1 is a structural schematic diagram of a suspended imaging system provided by a first embodiment of the present invention.
FIG. 2 is a schematic diagram of directions of light of the suspended imaging system illustrated in FIG. 1.
FIG. 3 is a structural schematic diagram of an aerial imaging assembly illustrated in FIG. 2.
FIG. 4 is a structural schematic diagram of other angle of the aerial imaging assembly illustrated in FIG. 3.
FIG. 5 is a structural schematic diagram of the suspended imaging system provided by a third embodiment of the present invention.
FIG. 6 is a schematic diagram of directions of light of the suspended imaging system illustrated in FIG. 5.

DETAILED DESCRIPTION OF PREFERRED EMBODIMENTS

The technical solutions in the embodiments of the present invention are clearly and completely described in the following with reference to the accompanying drawings in the embodiments of the present invention. Obviously, the described embodiments are only part of the embodiments of the present invention, but are not all embodiments of the present invention. All other embodiments obtained by those skilled in the art based on the embodiments of the present invention without creative efforts are within the scope of the present invention.

In the description of the present invention, it is to be understood that the orientation or positional relationship indicated by the terms "upper", "lower", etc., is based on the orientation or positional relationship shown in the accompanying figures, which is merely for the convenience for describing of the present invention and for the simplification of the description, and is not intended to indicate or imply that the indicated devices or elements have a specific orientation or is constructed and operated in a specific orientation. Therefore, it should not be understood as a limitation on the present invention. Moreover, the terms "first" and "second" are used for descriptive purposes only and are not to be understood as indicating or implying relative importance or implicitly indicating the number of the indicated technical characteristics. Therefore, the characteristics defined by "first" or "second" may include one or more of the described characteristics either explicitly or implicitly. In the description of the present invention, the meaning of "a plurality" is two or more unless clearly and specifically defined otherwise.

In addition, the present invention may repeat reference numerals and/or reference numerals in different examples, which are for the purpose of simplicity and clarity, and do not indicate the relationship between the various embodiments and/or arrangements discussed.

The suspended imaging system of the present invention will be further described in detail as follow with reference to specific embodiments.

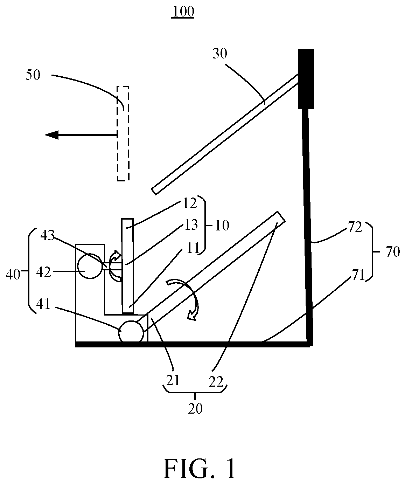

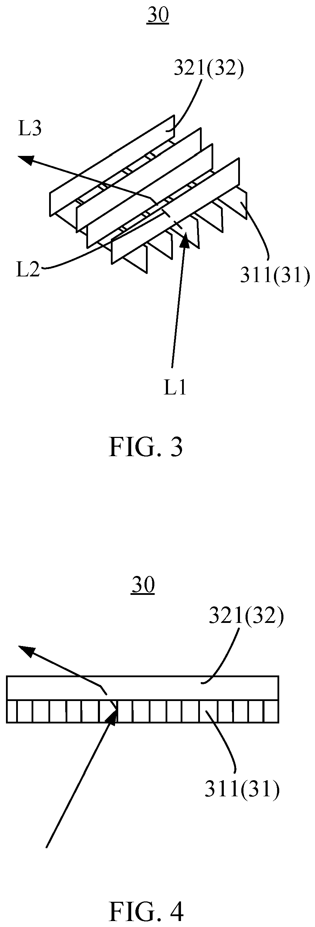

Please refer to FIGs. 1 to 4, a first embodiment of the present invention provides a suspended imaging system 100. The suspended imaging system 100 includes a display assembly 10, a reflective element 20, an aerial imaging assembly 30, and a driving assembly 40. The aerial imaging assembly 30 is located on a side of the display assembly 10. The reflective element 20 is located on a side of the display assembly 10 and is inclined toward a direction close to the display assembly 10. The driving assembly 40 is respectively connected to the display assembly 10 and the reflective element 20.

Wherein, a light-exiting surface of the display assembly 10 faces toward the reflective element 20.

Wherein, the reflective element 20 has an imaging function. Specifically, the display assembly 10 can form a virtual image of the display assembly 10 on other side of the reflective element 20. The virtual image of the display assembly 10 and the display assembly 10 are symmetrical about the reflective element 20, i.e., the virtual image of the display assembly 10 has the same shape and size as the display assembly 10.

In one optional embodiment of the present invention, the reflective element 20 is a planar reflective mirror. The planar reflective mirror is the only optical element that can form a perfect image, and it does not change a concentric property of a beam. After the beam is reflected by the planar reflective mirror, a diverged concentric beam is still a divergent concentric beam, and a converged concentric beam is still a converging concentric beam.

Wherein, the aerial imaging assembly 30 is opposite to a position of the virtual image of the display assembly 10. The aerial imaging assembly 30 is configured to reflect the virtual image of the display assembly 10, so as to form a suspended image 50 on other side of the aerial imaging assembly 30. The suspended image 50 and the virtual image of the display assembly 10 are symmetrical relative to the aerial imaging assembly 30.

In this embodiment, the aerial imaging assembly 30 is located on a side of the reflective element 20 and is inclined toward a direction of the virtual image of the display assembly 10, and the reflective element 20 is located between the aerial imaging assembly 30 and the virtual image of the display assembly 10.

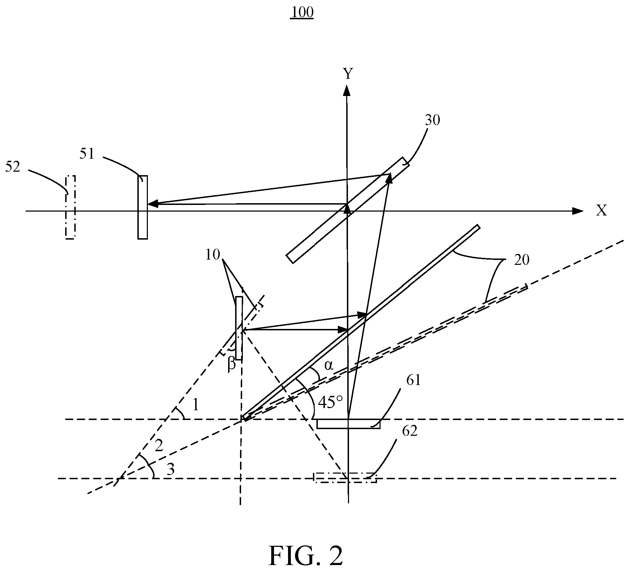

Please refer to FIG. 2 to FIG. 4, in this embodiment, the aerial imaging assembly 30 includes a first reflective array 31 and a second reflective array 32. The second reflective array 32 is located on the first reflective array 31. The first reflective array 31 includes a plurality of first reflective sheets 311 spaced apart. The second reflective array 32 includes a plurality of second reflective sheets 321 spaced apart. An extending direction of the first reflective sheets 311 is different from an extending direction of the second reflective sheets 321. A first reflection of light L1 emitted from the virtual image of the display assembly 10 occurs at the first reflective sheets 311. A generated first reflected light L2 is incident on the second reflective sheets 321, and a second reflection occurs. A generated second reflected light L3 forms the suspended image 50.

In this embodiment, a tilt angle of the first reflective sheets 311 relative to the display assembly 10 is 45°. The aerial imaging assembly 30 in this configuration can reduce a chance of ghost images appearing.

In this embodiment, the virtual image of the display assembly 10 is opposite to a position of the first reflective sheets 311, i.e., the virtual image of the display assembly 10 faces toward the first reflective sheets 311.

Wherein, the driving assembly 40 is configured to drive the display assembly 10 and the reflective element 20 to rotate clockwisely or to rotate counterclockwisely, so as to respectively adjust rotation angles of the display assembly 10 and the reflective element 20. Therefore, a distance between the virtual images of the display assembly 10 under different rotation angles is adjusted, so that the suspended image 50 is allowed to obtain a larger displacement, thereby making the suspended image 50 of the suspended imaging system 100 to have a relatively large display depth. The display assembly 10 of the suspended imaging system 100 does not need to be moved. Adjustment of the display depth of the suspended image 50 can be realized only by rotating the display assembly 10 and the reflective element 20, which can obtain a larger display depth in a smaller space and is beneficial to reduce the volume of the suspended imaging system 100.

In this embodiment, a first state is defined as that when the display assembly 10 and the reflective element 20 do not rotate, a second state is defined as that after the display assembly 10 and the reflective element 20 rotate. Wherein, solid lines with reference numbers of "10" and "20" in FIG. 2 represent the display assembly 10 and the reflective element 20 in the first state, the dashed lines represent the display assembly 10 and the reflective element 20 in the second state.

Wherein, the display assembly 10 in the first state forms a first virtual image 61 on other side of the reflective element 20, the display assembly 10 in the second state forms a second virtual image 62 on the other side of the reflective element 20, and the first virtual image 61 and the second virtual image 62 are parallel and spaced apart along a first direction Y.

In this embodiment, the display assembly 10 in the first state is perpendicular to the first virtual image 61, and an included angle between the reflective element 20 in the first state and the display assembly 10 in the first state is 45°.

In this embodiment, the display assembly 10 in the first state is vertical, the virtual image of the display assembly 10 is horizontal, the suspended image 50 is vertical, and an included angle between the reflective element 20 in the first state and the virtual image of the display assembly 10 is a sharp angle.

In other embodiment, the display assembly 10 in the first state can also be horizontal, correspondingly, the virtual image of the display assembly 10 is horizontal, the suspended image 50 is vertical, and an included angle between the reflective element 20 in the first state and the virtual image of the display assembly 10 is an obtuse angle.

In this embodiment, the driving assembly 40 drives the display assembly 10 to rotate a first angle $\beta$, the driving assembly 40 drives the reflective element 20 to rotate a second angle $\alpha$, and $\alpha$ and $\beta$ satisfy the following equation:

$$0° < \alpha < 45° \text{ (equation 1)};$$

$$0° < \beta < 90° \text{ (equation 2)};$$

and

$$\beta = 2\alpha \text{ (equation 3)}.$$

from the above relational equations (equation 3), it can be derived as follows:

an extension line of the display assembly 10 in the second state, an extension line of the second virtual image, and a connection line between a rotation center of the display assembly 10 and a center of the second virtual image form an isosceles triangle, the extension line of the first virtual image is parallel to the extension line of the second dash line, the extension line of the reflective element 20 in the second state is an angle bisector of the isosceles triangle, the extension line of the display assembly 10 in the first state is other angle bisector of the isosceles triangle. According to the characteristics of the triangle: in FIG. 2, $\angle=90°-\beta$, $\angle2=\angle3=45°-\alpha$, $\angle1=\angle2+\angle3$, then $90°-\beta=2(45°-\alpha)$, and then $\beta=2\alpha$.

In one embodiment of the present invention, when the driving assembly 40 drives the display assembly 10 and the reflective element 20 to respectively rotate clockwisely, a distance from the second virtual image 62 to the aerial imaging assembly 30 is greater than a distance from the first virtual image 61 to the aerial imaging assembly 30.

In other embodiment of the present invention, when the driving assembly 40 drives the display assembly 10 and the reflective element 20 to respectively rotate counterclockwisely, a distance from the second virtual image 62 to the aerial imaging assembly 30 is less than a distance from the first virtual image 61 to the aerial imaging assembly 30.

In one embodiment of the present invention, the first virtual image 61 passes through the aerial imaging assembly 30 and forms a first suspended image 51 on the other side of the aerial imaging assembly 30, the second virtual image 62 passes through the aerial imaging assembly 30 and forms a second suspended image 52 on the other side of the aerial imaging assembly 30, and the first suspended image 51 and the second suspended image 52 are parallel and spaced apart along a second direction X perpendicular to the first direction Y.

Please refer to FIG. 1 again. The driving assembly 40 includes a first driving member 41, a second driving member 42, and a rotating shaft 43. The first driving member 41 is connected to an end of the reflective element 20. The first driving member 41 is configured to drive the reflective element 20 to rotate at the second angle $\alpha$. The second driving member 42 is fixedly connected to an end of the rotating shaft 43. Other end of the rotating shaft 43 away from the second driving member 42 is connected to the display assembly 10. The second driving member 42 is configured to drive the rotating shaft 43 to rotate. The rotating shaft 43 drives the display assembly 10 to rotate.

Specifically, the reflective element 20 includes a connection end 21 and a first free end 22, the connection end 21 is connected to the driving assembly 40, and the driving assembly 40 drives the reflective element 20 to rotate around the connection end 21.

Specifically, the display assembly 10 includes a second free end 11, a third free end 12, and a middle portion 13 connecting to the second free end 11 and the third free end 12, the rotating shaft 43 is fixedly connected to the middle portion 13, and the display assembly 10 rotates with the rotating shaft 43 acting as a rotation center.

Please refer to FIG. 1 again. The suspended imaging system 100 further includes a fixing assembly 70, and the driving assembly 40 and the aerial imaging assembly 30 are respectively fixed on the fixing assembly 70. Specifically, the fixing assembly 70 includes a first fixing portion 71 and a second fixing portion 72 vertically connected to the first fixing portion 71, the driving assembly 40 is fixed on the first fixing portion 71, the aerial imaging assembly 30 is fixed on the second fixing portion 72, the reflective element 20 is inclined relative to the first fixing portion 71 and extends toward the second fixing portion 72, and the aerial imaging assembly 30 is inclined relative to the second fixing portion 72 and extends toward the first fixing portion 71.

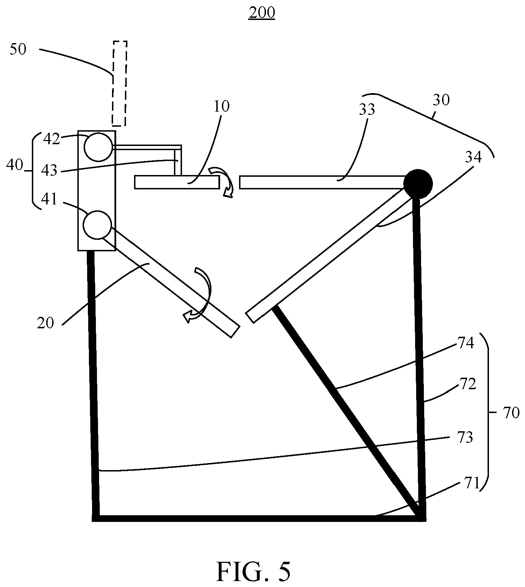

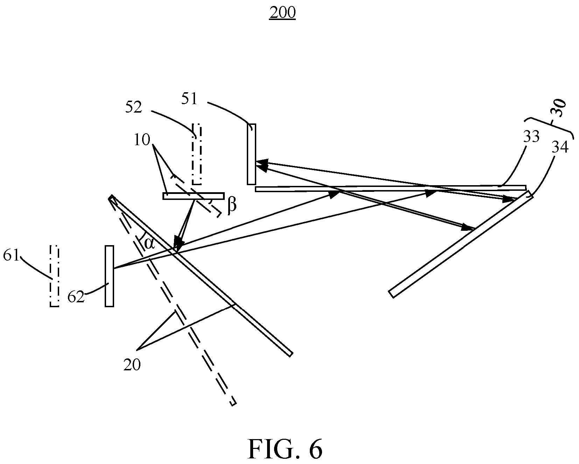

Please refer to FIG. 5 to FIG. 6. a second embodiment of the present invention provides a suspended imaging system 200. The structure of the suspended imaging system 200 is similar to the structure of the suspended imaging system 100. The suspended imaging system 200 also includes: a display assembly 10, a reflective element 20, an aerial imaging assembly 30, and a driving assembly 40. The structures of the display assembly 10, the reflective element 20, and the driving assembly 40, and a positional relationship of the three are same as the structures of the display assembly 10, the reflective element 20, and the driving assembly 40, and a positional relationship of the three in the suspended imaging system 100. The overall positional relationships between the aerial imaging assembly 30 and the display assembly 10 are also same. The difference between the structure of the suspended imaging system 200 and the suspended imaging system 100 is that: the aerial imaging assembly 30 includes a beam splitting structure 33 and a retroreflective structure 34, the beam splitting structure 33 is located on a side of the display assembly 10, and the retroreflective structure 34 is located on a side of the beam splitting structure 33 and is inclined toward a direction close to the beam splitting structure 33. Wherein, the virtual image of the display assembly 10 and the retroreflective structure 34 are located on the same side of the beam splitting structure 33, light emitted from the virtual image of the display assembly 10 is incident on the beam splitting structure 33 and is reflected to the retroreflective structure 34 by the beam splitting structure 33, a part of light reflected by the retroreflective structure 34 forms the virtual image of the display assembly 10, the virtual image of the display assembly 10 and the suspended image 50 are symmetrical relative to the beam splitting structure 33, and the reflective element 20 and the retroreflective structure 34 are located on a same side of the beam splitting structure 33.

In this embodiment, the beam splitting structure 33 is perpendicular to the virtual image of the display assembly 10.

Wherein, a part of the light incident on the beam splitting structure 33 is reflected, and other part of the light passes through the beam splitting structure 33. The light incident on the retroreflective structure 34 can return from an opposite direction close to the incident light.

In this embodiment, the display assembly 10 in the first state is horizontal, the virtual image of the display assembly 10 and the suspended image 50 are vertical, and an included angle between the reflective element 20 in the first state and the virtual image of the display assembly 10 is an obtuse angle.

Of course, in other embodiment, the display assembly 10 in the first state can also be vertical, at this time, the virtual image of the display assembly 10 is horizontal, the suspended image 50 is vertical, and an included angle between the reflective element 20 in the first state and the virtual image of the display assembly 10 is a sharp angle.

Wherein, the fixing assembly 70 of the suspended imaging system 200 further includes a third fixing portion 73 and a fourth fixing portion 74, and the third fixing portion 73 is vertically connected to the first fixing portion 71 and is parallel to the second fixing portion 72. An end of the fourth fixing portion 74 is fixedly connected to the first fixing portion 71 and the second fixing portion 72, and other end of the fourth fixing portion 74 is fixed on the retroreflective structure 34. The driving assembly 40 is fixed on the third fixing portion 73, the beam splitting structure 33 and the retroreflective 34 are both fixed on the second fixing portion 72, and the retroreflective structure 34 is further fixed on the fourth fixing portion 74.

In the suspended imaging system provided by the present invention, by disposing the reflective element on a side of the display assembly, by using the driving assembly to drive the display assembly and the reflective element to rotate clockwisely or counterclockwisely, and by using the reflective element to form the virtual image of the display assembly being symmetrical about the reflective element on other side of the reflective element facing away the display assembly, the virtual image of the display assembly forms the suspended image on other side of the aerial imaging assembly by the aerial imaging assembly. As the display assembly and the virtual image of the display assembly are symmetrical about the reflective element, and the virtual image of the display assembly and the suspended image are symmetrical about the aerial imaging assembly, so a distance between the virtual images of the display assembly under different rotation angles can be adjusted by respectively adjusting the rotation angles of the display assembly and the reflective element, so that the suspended image is allowed to obtain a larger displacement, thereby making the suspended image of the suspended imaging system to have a relatively large display depth. Therefore, the display assembly of the suspended imaging system provided by the present invention does not need to be moved, and adjustment of the display depth of the suspended image can be realized only by rotating the display assembly and the reflective element, which can obtain a larger display depth in a smaller space and is beneficial to reduce the volume of the suspended imaging system.

In summary, although the present invention has disclosed the preferred embodiments as above, however the above-mentioned preferred embodiments are not to limit to the present invention. A person skilled in the art can make any change and modification, therefore the scope of protection of the present invention is subject to the scope defined by the claims.

## Claims

1. A suspended imaging system, configured to form a suspended image, wherein, the suspended imaging system comprises:

   a display assembly;
   an aerial imaging assembly located on a side of the display assembly;
   a reflective element located on a side of the display assembly and inclined toward a direction close to the display assembly, wherein the display assembly forms a virtual image of the display assembly on other side of the reflective element, the virtual image of the display assembly passes through the aerial imaging assembly and forms the suspended image on other side of the aerial imaging assembly; and
   a driving assembly respectively connected to the display assembly and the reflective element, wherein the driving assembly drives the display assembly and the reflective element to rotate clockwisely or to rotate counterclockwisely; and wherein the virtual image of the display assembly and the display assembly are symmetrical about the reflective element, the virtual image of the display assembly is opposite to a position of the aerial imaging assembly, and the suspended image and the virtual image of the display assembly are symmetrical relative to the aerial imaging assembly.

2. The suspended imaging system as claimed in claim 1, wherein a first state is defined as that when the display assembly and the reflective element do not rotate,

   a second state is defined as that after the display assembly and the reflective element rotate, the display assembly in the first state forms a first virtual image on the other side of the reflective element,
   the display assembly in the second state forms a second virtual image on the other side of the reflective element, and
   the first virtual image and the second virtual image are parallel and spaced apart along a first direction.

3. The suspended imaging system as claimed in claim 2, wherein the display assembly in the first state is perpendicular to the first virtual image, and an included angle between the reflective element in the first state and the display assembly in the first state is 45°.

4. The suspended imaging system as claimed in claim 3, wherein the driving assembly drives the display assembly to rotate a first angle $\beta$, and the driving assembly drives the reflective element to rotate a second angle $\alpha$, and $\alpha$ and $\beta$ satisfy following equations of $0°<\alpha<45°$, $0°<\beta<90°$, and $\beta=2\alpha$.

5. The suspended imaging system as claimed in claim 3, wherein when the driving assembly drives the display assembly and the reflective element to respectively rotate clockwisely, a distance from the second virtual image to the aerial imaging assembly is greater than a distance from the first virtual image to the aerial imaging assembly.

6. The suspended imaging system as claimed in claim 3, wherein when the driving assembly drives the display assembly and the reflective element to respectively rotate counterclockwisely, a distance from the second virtual image to the aerial imaging assembly is less than a distance from the first virtual image to the aerial imaging assembly.

7. The suspended imaging system as claimed in claim 2, wherein the first virtual image passes through the aerial imaging assembly and forms a first suspended image on the other side of the aerial imaging assembly, the second virtual image passes through the aerial imaging assembly and forms a second suspended image on the other side of the aerial imaging assembly, and the first suspended image and the second suspended image are parallel and spaced apart along a second direction perpendicular to the first direction.

8. The suspended imaging system as claimed in claim 1, wherein the aerial imaging assembly comprises a first reflective array and a second reflective array, the second reflective array is located on the first reflective array, the first reflective array comprises a plurality of first reflective sheets spaced apart, the second reflective array comprises a plurality of second reflective sheets spaced apart, and an extending direction of the plurality of first reflective sheets is different from an extending direction of the plurality of second reflective sheets; and wherein a first reflection of light emitted from the virtual image of the display assembly occurs at the plurality of first reflective sheets, a generated first reflected light is incident on the plurality of second reflective sheets, and a second reflection occurs; and a generated second reflected light forms the suspended image.

9. The suspended imaging system as claimed in claim 8, wherein a tilt angle of the plurality of first reflective sheets relative to the display assembly is 45°.

10. The suspended imaging system as claimed in claim 9, wherein the plurality of first reflective sheets are opposite to a position of the virtual image of the display assembly.

11. The suspended imaging system as claimed in claim 1, wherein the aerial imaging assembly comprises:

    a beam splitting structure located on a side of the display assembly; and
    a retroreflective structure located on a side of the beam splitting structure and inclined toward a direction close to the beam splitting structure; and
    wherein the virtual image of the display assembly and the retroreflective structure are located on the same side of the beam splitting structure, a light emitted from the virtual image of the display assembly incident on the beam splitting structure is reflected to the retroreflective structure, a part of light reflected by the retroreflective structure forms the virtual image of the display assembly, and the virtual image of the display assembly and the suspended image are symmetrical relative to the beam splitting structure.

12. The suspended imaging system as claimed in claim 11, wherein the beam splitting structure is perpendicular to the virtual image of the display assembly.

13. The suspended imaging system as claimed in claim 11, wherein the suspended imaging system comprises a fixing assembly, and the driving assembly, the beam splitting structure, and the retroreflective structure are respectively fixed on the fixing assembly.

14. The suspended imaging system as claimed in claim 1, wherein the reflective element is a planar reflective mirror.

15. The suspended imaging system as claimed in claim 2, wherein an included angle between the reflective element in the first state and the virtual image of the display assembly is an obtuse angle.

16. The suspended imaging system as claimed in claim 2, wherein an included angle between the reflective element in the first state and the virtual image of the display assembly is a sharp angle.

17. The suspended imaging system as claimed in claim 1, wherein the reflective element comprises a connection end and a first free end, the connection end is connected to the driving assembly, and the driving assembly drives the reflective element to rotate around the connection end.

18. The suspended imaging system as claimed in claim 17, wherein the driving assembly comprises a rotating shaft, the display assembly is fixed on the rotating shaft, the display assembly comprises a second free end, a third free end, and a middle portion connecting to the second free end and the third free end, and the rotating shaft is fixedly connected to the middle portion; and

wherein the driving assembly drives the rotating shaft to rotate to drive the display assembly to rotate around with the rotating shaft acting as a rotation center.

19. The suspended imaging system as claimed in claim 8, wherein the suspended imaging system comprises a fixing assembly, and the driving assembly and the aerial imaging assembly are respectively fixed on the fixing assembly.

20. The suspended imaging system as claimed in claim 2, wherein the first virtual image passes through the aerial imaging assembly and forms a first suspended image on the other side of the aerial imaging assembly, the second virtual image passes through the aerial imaging assembly and forms a second suspended image on the other side of the aerial imaging assembly, and the first suspended image and the second suspended image are parallel and spaced apart along a second direction perpendicular to the first direction.

FIG. 1

FIG. 2

30

321(32)

L3

L2

311(31)

L1

FIG. 3

30

321(32)

311(31)

FIG. 4

**FIG. 5**

FIG. 6

## INTERNATIONAL SEARCH REPORT

International application No.

**PCT/CN2022/131538**

| A. | CLASSIFICATION OF SUBJECT MATTER |
|---|---|

G02B30/56(2020.01)i;   G09F19/18(2006.01)i

According to International Patent Classification (IPC) or to both national classification and IPC

| B. | FIELDS SEARCHED |
|---|---|

Minimum documentation searched (classification system followed by classification symbols)

IPC: G02B; G09F

Documentation searched other than minimum documentation to the extent that such documents are included in the fields searched

Electronic data base consulted during the international search (name of data base and, where practicable, search terms used)

CNTXT, ENTXT, WPABS: 悬浮, 成像, 显示器, 液晶, 源图像, 转动, 旋转, 图像, 深度, 反射镜, 角, 2倍, 位置, 调节, 改变, 距离, 虚像, 角度, 不变, suspension, imaging, display, source, rotate, depth, reflect, angle, 2times, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112530328 A (BOE TECHNOLOGY GROUP CO., LTD.) 19 March 2021 (2021-03-19) description, paragraphs [0038]-[0062], and figures 1-4 | 1-20 |
| A | CN 113208270 A (DIGITAL TECHNOLOGY CENTER OF BEIJING PEONY ELECTRONICS GROUP CO., LTD. et al.) 06 August 2021 (2021-08-06) entire document | 1-20 |
| A | CN 209590817 U (ZHEJIANG PRISM CULTURE MEDIA CO., LTD.) 05 November 2019 (2019-11-05) entire document | 1-20 |
| A | JP 2017067980 A (NITTO DENKO CORP.) 06 April 2017 (2017-04-06) entire document | 1-20 |
| A | CN 115206215 A (SHANGHAI DANLAW-XICHENG INTELLIGENCE TECHNOLOGY CO., LTD.) 18 October 2022 (2022-10-18) entire document | 1-20 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2023** | **21 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2022/131538**

| Patent document cited in search report | | | Publication date (day/month/year) | Patent family member(s) | Publication date (day/month/year) |
|---|---|---|---|---|---|
| CN | 112530328 | A | 19 March 2021 | None | |
| CN | 113208270 | A | 06 August 2021 | None | |
| CN | 209590817 | U | 05 November 2019 | None | |
| JP | 2017067980 | A | 06 April 2017 | None | |
| CN | 115206215 | A | 18 October 2022 | None | |

Form PCT/ISA/210 (patent family annex) (July 2022)